# NEUE EUROPÄISCHE PATENTSCHRIFT

(11) **EP 0 170 059 B2**
(45) Veröffentlichungstag und Bekanntmachung des Hinweises auf die Entscheidung über den Einspruch: **11.10.1995**
(45) Hinweis auf die Patenterteilung: 11.05.1988
(21) Anmeldenummer: 85107972.3
(22) Anmeldetag: 27.06.1985
(51) Int. Cl.: C08F 10/02, C08F 4/62

(54) **Verfahren zur Polymerisation von Ethylen oder von Mischungen von Ethylen mit anderen l-Olefinen**
Process for the polymerisation of ethylene mixtures of ethylene with other 1-olefines
Procédé de polymérisation d'éthylène ou de mélanges d'éthylène avec d'autres 1-oléfines

(30) Priorität: 05.07.1984 DE 3424697
(43) Veröffentlichungstag der Anmeldung: 05.02.1986
(73) Patentinhaber: HOECHST AKTIENGESELLSCHAFT, 65926 Frankfurt am Main (DE)
(72) Erfinder: Böhm, Ludwig, Dr., D-6234 Hattersheim am Main (DE)

(56) Entgegenhaltungen:
- EP-A- 0 108 339
- DE-A- 3 240 382

## Beschreibung

Die vorliegende Erfindung betrifft ein Verfahren zur Herstellung von Homo- und Copolymerisaten des Ethylens.

Es sind Katalysatorsysteme beschrieben worden, die aus einer Cyclopentadienylverbindung des Titans oder Zirkoniums und einer Aluminiumkomponente vom Aluminoxan-Typ mit der allgemeinen Formel Al₂OR₄(Al(R)-O-)ₙ für lineares Aluminoxan und (Al(R)-O-)ₙ₊₃ für cyclisches Aluminoxan bestehen (vgl. Deutsche Offenlegungsschrift 3 127 133). Das als Cokatalysator-Komponente eingesetzte Aluminoxan wird entsprechend den Beispielen in relativ großen Mengen eingesetzt. Für ein technisches Verfahren müssen bei einem Einsatz von etwa 1 mg/cm³ oder 1 kg/m³ große Mengen des Aluminoxans zur Verfügung gestellt werden.

Weiterhin ist ein Verfahren zur Herstellung der Aluminoxan-Komponente bekannt, wobei die bevorzugten oligomeren Aluminoxane durch Umsetzung von AlR₃ mit Aluminiumsulfathydrat in Kohlenwasserstoffen bei Temperaturen bevorzugt zwischen 15 und 40°C hergestellt werden (vgl. Deutsche Offenlegungsschrift 3 240 383). Aus den Beispielen geht ferner hervor, daß diese Herstellung zeitaufwendig ist (in den Beispielen sind 10 bis 40 h angegeben), und daß der verbleibende Feststoff von der Lösung des Aluminoxans im Kohlenwasserstoff abgetrennt werden muß. Zusammenfassend bedeutet dies, daß die Aluminoxan-Komponente in einem separaten Verfahrensschritt hergestellt werden muß.

Schließlich ist auch ein Verfahren zur Herstellung von gefüllten Polyolefinen bekannt, bei welchem durch Ad- oder oder Absorption Wasser enthaltende anorganische Stoffe mit Aluminiumtrialkylen ungesetzt werden und eine Cyclopentadienylverbindung des Titans oder Zirkoniums verwendet wird (vgl. Deutsche Offenlegungsschrift 3 240 382).

Es wurde nun gefunden, daß man die separat durchzuführende Synthese des Aluminoxans umgehen und ein hochaktives Katalysator-System in einem Verfahrensschritt innerhalb kurzer Zeit herstellen kann.

Gegenstand der Erfindung ist somit ein Verfahren zur Polymerisation von Ethylen oder von Mischungen von Ethylen mit bis zu 8 Gew.-% eines 1-Olefins der Formel R¹-CH=CH₂, worin R¹ einen geradkettigen oder verzweigten Alkylrest mit 1 bis 12 Kohlenstoffatomen bedeutet, in Lösung oder in Suspension bei einer Temperatur von 0 bis 150°C und einem Druck von 1 bis 50 bar, in Gegenwart eines Mischkatalysators bestehend aus einer Übergangsmetallkomponente (Komponente A) und einer aluminium-organischen Verbindung (Komponente B), wobei die Komponente B durch Umsetzung eines durch Ad- oder Absorption Wasser enthaltenden anorganischen Stoffes mit einem Aluminiumtrialkyl erhalten wurde, dadurch gekennzeichnet, daß die Polymerisation in Gegenwart eines Mischkatalysators durchgeführt wird, dessen Komponente B durch Umsetzung von Wasser mit einen Aluminiumtrialkyl im Molverhältnis Aluminiumtrialkyl zu Wasser von 4 : 1 bis 0,25 : 1 in Anwesenheit eines handelsüblichen feinteiligen Feststoffes auf Basis Siliciumdioxid und/oder Aluminiumoxid, wobei der Feststoff ohne Vorbehandlung eingesetzt wird, im Gewichtsverhältnis von Wasser zu handelsüblichem, nicht vorbehandeltem Feststoff von 3 : 1 bis 1 : 3 bei einer Temperatur von -20 bis 100°C hergestellt wurde, und dessen Komponente A eine Übergangsmetallverbindung der Formel

(Cyclopentadienyl)₂MeRHal, worin

R Cyclopentadienyl, ein C₁-bis C₆-Alkyl oder Halogen ist, Hal Halogen bedeutet und Me Titan oder Zirkonium ist, darstellt.

Für die Herstellung der erfindungsgemäß zu verwendenden Katalysatorkomponente B wird ein Aluminiumtrialkyl mit Wasser in Anwesenheit eines handelsüblichen Feststoffes umgesetzt, wobei der Feststoff ohne Vorbehandlung eingesetzt wird.

Der Feststoff ist ein feinteiliges, poröses Material auf Basis Siliciumdioxid und/oder Aluminiumoxid. Derartige Feststoffe sind im Handel erhältlich. Das verwendete Aluminiumtrialkyl ist Aluminiumtrimethyl oder Aluminiumtriethyl.

Für die Umsetzung wird ein Reaktor mit Rührer, Temperiereinrichtung und Schutzgasüberlagerung (N₂, Ar), welcher auch der Polymerisationsreaktor sein kann, verwendet. Das vorgelegte Reaktionsmedium ist zweckmäßigerweise das auch bei der Polymerisation verwendete Dispergiermittel. Als solches eignen sich aliphatische oder cycloaliphatische Kohlenwasserstoffe wie Butan, Pentan, Hexan, Heptan, Cyclohexan, Methylcyclohexan, Isooctan sowie aromatische Kohlenwasserstoffe wie Benzol, Toluol, Xylol; auch Benzin- und hydrierte Dieselölfraktionen, die sorgfältig von Sauerstoff, Schwefelverbindungen und Feuchtigkeit befreit worden sind, sind brauchbar. Das Dispergiermittel darf keine Verbindungen mit Doppelbindungen enthalten.

Sodann wird bei einer Temperatur von -20 bis 100, vorzugsweise 15 bis 40°C, der feinteilige, poröse Feststoff, ohne Vorbehandlung, in einer Menge von 10 bis 1000 mg/dm³ unter Schutzgas und langsamem Rühren eingetragen. Danach wird die beabsichtigte Menge Wasser (0,03 bis 3 cm³/dm³) hinzugefügt und wenige Minuten weitergerührt. Daran anschließend erfolgt unter langsamem Rühren und Schutzgasüberlagerung die Zugabe des Aluminiumtrialkyls (Aluminiumatrimethyl, Aluminiumtriethyl). Es werden 0,5 bis 5 cm³/dm³ der reinen, flüssigen Komponenten zugegeben. Die Cokatalysatorkomponente wird gebildet, indem 10 bis 60 Minuten gerührt wird. Das molare Verhältnis von Aluminiumalkylverbindung zu Wasser beträgt 4 bis 0,25, bevorzugt 0,5 bis 3.

Die Molmasse der Aluminoxan-Komponente wurde durch kryoskopische Messungen in Benzol zu 800 bis 1000 g/mol ermittelt. Das entspricht im Falle des Methylaluminoxans für lineare Moleküle n-Werten zwischen 11 und 15 und im Fall der cyclischen Moleküle n-Werten zwischen 10 und 14.

Falls die Umsetzung des Aluminiumtrialkyls mit dem Wasser im Polymerisationskessel durchgeführt wurde, wird dessen Inhalt jetzt auf die Polymerisationstemperatur gebracht. Ist diese Temperatur erreicht, wird die Katalysatorkomponente A, welche eine Übergangsmetallverbindung der Formel

(Cyclopentadienyl)₂MeRHal ist, worin

R Cyclopentadienyl, ein C₁- bis C₆-Alkyl oder Halogen, vorzugsweise Chlor ist, Me Titan oder Zirkonium bedeutet und Hal Halogen, vorzugsweise Chlor ist, zugefügt und die Polymerisation durch Einleiten der Reaktionsteilnehmer gestartet.

Die Polymerisation von Ethylen und die Copolymerisation von Ethylen mit 1-Olefinen werden in Lösung oder in Suspension, kontinuierlich oder diskontinuierlich, bei einer Temperatur von 0 bis 150°C, vorzugsweise 50 bis 100°C durchgeführt. Der Druck beträgt 1 bis 50 bar, vorzugsweise 1,5 bis 10 bar.

Zur Herstellung von Polymerisaten mit sehr breiter Molekulargewichtsverteilung kann die Polymerisation in 2 oder mehreren Stufen durchgeführt werden, wobei in den einzelnen Stufen die Polymerisationstemperatur und/oder die Reglermenge (Wasserstoff) variiert werden kann.

Für die Copolymerisation mit Ethylen werden 1-Olefine der Formel R¹-CH=CH₂, in der R¹ einen geradkettigen oder verzweigten Alkylrest mit 1 bis 12, vorzugsweise 1 bis 6 Kohlenstoffatomen bedeutet, verwendet. Beispielsweise seien Propylen, Buten-(1), Penten-(1), Hexen-(1), 4-Methylpenten-(1), Octen-(1) genannt. Die Gemische aus Ethylen und den genannten 1-Olefinen enthalten bis zu 8 Gew.-%, insbesondere bis zu 2 Gew.-%, an 1-Olefinen.

Das molare Verhältnis Al : Ti bzw. Zr bei der Polymerisation beträgt 5000 bis 20000, vorzugsweise 8000 bis 15000.

Die Polymerisation wird mit oder ohne Wasserstoffzufuhr zur Regelung des Molekulargewichts des Polymeren durchgeführt. Wasserstoffmengen bis zu 80 Vol.-% in der Gasphase sind möglich. Das erfindungsgemäße Kontaktsystem spricht sehr gut auf Wasserstoff an, so daß, um ein bestimmtes Molekulargewicht zu erreichen, eine geringere Wasserstoffmenge benötigt wird als bei Einsatz von bekannten Kontaktsystemen.

Man kann sowohl thermoplastische wie elastomere Polymere mit unterschiedlichen mittleren Molekulargewichten und Dichten mit diesen Katalysator-Systemen herstellen.

Die erhaltenen Polymeren werden durch folgende Messungen charakterisiert: Schmelzindex (MFI) nach DIN 53735 in Verbindung mit den Erläuterungen für Polyethylen, Dichte (d) nach DIN 53479, Verfahren A an der Preßplatte, reduzierte spezifische Viskosität (VZ) nach ISO/R 1191, Schüttdichte des Pulvers nach DIN 53912.

### Beispiel 1

In einem 2 dm³-Reaktor wurden unter Überlagerung mit Stickstoff 1 dm³ einer Benzinfraktion mit einem Siedebereich zwischen 100 und 140°C bei Raumtemperatur vorgelegt. Alle weiteren Operationen wurden unter Stickstoffüberlagerung durchgeführt. Unter langsamem Rühren (4 Upm) wurden nacheinander 500 mg SiO₂ und 0,29 cm³ Wasser in den Reaktor eingetragen. Anschließend wurde 20 Minuten lang gerührt. Danach wurden 3,25 cm³ Aluminiumtrimethyl zugegeben und weitere 30 Minuten lang gerührt. Der Reaktor wurde danach auf die Polymerisationstemperatur von 85°C gebracht. Als der Reaktorinhalt die Temperatur von 85°C erreicht hatte, wurden unter Schutzgas 0,004 mMol, entsprechend 0,91 mg, (Cyclopenadienyl)₂ZrCl₂ zugegeben.

Unmittelbar danach wurde die Drehzahl des Rührers auf 100 Upm erhöht und Ethylen bis zu einem Druck von 3 bar aufgedrückt. Während einer Reaktionszeit von 5 h wurde dieser Druck konstant gehalten, indem Ethylen in dem Umfang nachgeliefert wurde, in dem es durch die Polymerisation verbraucht wurde. Nach 5 h Reaktionszeit wurde die Ethylenzufuhr unterbrochen, der Reaktor entspannt und die Polymersuspension abgelassen. Das Polymere wurde abfiltriert, mit Aceton gewaschen und bei 80°C im Vakuum mehrere Stunden getrocknet.

Es wurden 150 g Polyethylen mit folgenden Produktdaten erhalten: MFI 190/5= 0,4 g/10 min, MFI 180/21,6= 5,3 g/10 min, VZ= 250 cm³/g; Schüttdichte des Pulvers 0,15 g/cm³; Dichte= 0,960 g/cm³. Die Katalysatorproduktivität betrug nach 5 h Reaktionszeit bei 3 bar Ethylenpartialdruck 37,5 kg PE/mMol Zr.

### Beispiel 2

Dieser Versuch wurde entsprechend dem Beispiel 1 durchgeführt, jedoch wurde ein anderes SiO₂ eingesetzt. Es wurden in dem 2 dm³-Reaktor 1 dm³ Benzin vorgelegt und 300 mg SiO₂ eingetragen. Danach wurden 0,29 cm³ Wasser zugegeben und 20 Minuten lang bei Raumtemperatur gerührt. Dann wurden 3,25 cm³ Aluminiumtrimethyl zugefügt und weitere 20 Minuten lang gerührt. Der Reaktor wurde auf die Polymerisationstemperatur von 85°C gebracht. Nach Erreichen dieser Temperatur wurden 0,004 mMol, entsprechend 0,91 mg, (Cyclopentadienyl)₂ ZrCl₂ zugegeben.

Die Polymerisation wurde wie in Beispiel 1 beschrieben durchgeführt. Man erhielt 65 g Polyethylen mit folgenden Produktdaten: VZ= 260 cm³/g; Dichte= 0,959 g/cm³. Die Katalysatorproduktivität betrug nach 5 h Reaktionszeit bei 3 bar Ethylenpartialdruck 16,3 kg PE/mMol Zr.

### Beispiel 3

Dieser Versuch wurde entsprechend Beispiel 1 durchgeführt, jedoch wurde anstelle des in Beispiel 1 eingesetzten SiO₂ ein Al₂O₃ verwendet. Es wurden in einem 2 dm³-Reaktor 1 dm³ Benzin vorgelegt und unter langsamem Rühren 100 mg des Al₂O₃ eingetragen. Danach wurden 0,20 cm³ Wasser zugegegeben und 20 Minuten lang bei Raumtemperatur gerührt. Nach Zugabe von 2,25 cm³ Aluminiumtrimethyl wurde weitere 20 Minuten lang gerührt. Danach wurde der Reaktor auf die Polymerisationstemperatur von 85°C gebracht. Nach Erreichen dieser Temperatur wurden 0,004 mMol, entsprechend 0,91 mg. (Cyclopentadienyl)₂ZrCl₂ zugegeben. Die Polymerisation wurde wie in Beispiel 1 beschrieben durchgeführt.

Man erhielt 85 g Polyethylen mit folgenden Produktdaten: MFI 190/5= 1,0 g/10 min, VZ= 200 cm³/g; Schüttdichte des Pulvers: 0,18 g/cm³. Die Katalysatorproduktivität betrug nach 5 h Reaktionszeit bei 3 bar Ethylendruck 21,3 kg PE/mMol Zr.

### Beispiel 4

Dieser Versuch wurde wie in Beispiel 1 beschrieben durchgeführt, jedoch wurde zur Regelung des Molekulargewichts Wasserstoff in den Reaktor gegeben. Der Wasserstoffgehalt im Gasraum des Reaktors betrug ∼ 1,5 Mol.-%. Die Polymerisation wurde 5 h lang bei einem Ethylenpartialdruck von 3 bar durchgeführt. Es wurden 130 g Polyethylen mit folgenden Produktdaten erhalten: MFI 190/5= 18 g/10 min; MFI 190/15= 105 g/10 min, VZ= 120 cm³/g; Schüttdichte des Pulvers= 0,18 g/cm³; Dichte= 0,969 g/cm³. Die Katalysatorproduktivität betrug nach 5 h Reaktionszeit bei 3 bar Ethylenpartialdruck 32,5 kg PE/mMol Zr.

### Beispiel 5

Bei diesem Versuch wurde wie in Beispiel 1 beschrieben das Katalysator-System hergestellt. Bevor Ethylen aufgepreßt wurde, wurden 100 cm³ flüssiges 1-Buten aus einer Druckschleuse in den Reaktor gedrückt. Dann wurde Ethylen bis zu einem Druck von 3 bar aufgedrückt und die Polymerisation 5 h lang ohne weitere Zugabe von 1-Buten durchgeführt. Nach Beendigung der Polymerisation wurde der Reaktor entspannt und auf 50°C abgekühlt. Der Reaktorinhalt wurde sodann in 5 dm³ Aceton eingerührt. Das Polymere wurde filtriert und bei 60°C mehrere Stunden im Vakuum getrocknet. Es wurden 120 g Copolymeres mit folgenden Produktdaten erhalten: MFI 190/2,16= 35 g/10 min; VZ= 100 cm³/g; Dichte= 0,936 g/cm³. Die Katalysatorproduktivität betrug 30 kg Polymeres/mMol Zr.

### Beispiel 6

Dieser Versuch wurde in einem 2 dm³ Dreihalskolben, der mit Rührer und Eingasleitungen ausgestattet war, durchgeführt. Es wurden unter Schutzgas (Ar) 1 dm³ einer Benzinfraktion mit einem Siedebereich zwischen 100 und 140°C bei Raumtemperatur vorgelegt. Alle weiteren Operationen wurden ebenfalls unter Schutzgas durchgeführt. Unter langsamem Rühren (10 Upm) wurden nacheinander 500 mg SiO₂ gemäß Beispiel 1 und 0,29 cm³ Wasser in den Reaktor eingetragen. Anschließend wurde 15 Minuten lang gerührt. Danach wurden 3,25 cm³ Aluminiumtrimethyl zugegeben und weitere 30 Minuten gerührt. Der Reaktor wurde sodann auf die Polymerisationstemperatur von 40°C gebracht. Als der Reaktorinhalt diese Temperatur erreicht hatte, wurden unter Schutzgas 0,004 mMol, entsprechend 0,91 mg, (Cyclopentadienyl)₂ZrCl₂ zugegeben.

Unmittelbar danach wurde die Drehzahl des Rührers auf 50 Upm erhöht. Man gab dann 50 cm³ 1,7-Octadien (dieses Produkt wurde vor dem Einsatz mit Natronlauge ausgeschüttelt, mit Wasser gewaschen, mit Magnesiumsulfat getrocknet, destilliert und über Molsieb 3 Å unter Schutzgas aufbewahrt) und leitete anschließend bei Normaldruck 5 Volumenteile Propen und 2 Volumenteile Ethylen in die Benzinphase ein.

Nach 1 h Reaktionszeit war ein Produkt entstanden, welches sich um den Rührer sammelte. Dieses Produkt wurde zusammen mit dem Reaktorinhalt einer Wasserdampfdestillation zur Entfernung des Benzins unterworfen und anschließend bei 30°C im Vakuum getrocknet. Man erhielt 30 g einer elastomeren Formmasse, die sich nicht mehr in Kohlenwasserstoffen (Dekahydronaphthalin) bei 150°C löste. Die Katalysatorproduktivität betrug 7,5 kg Polymeres/mMol Zr.

## Patentansprüche

1. Verfahren zur Polymerisation von Ethylen oder von Mischungen von Ethylen mit bis zu 8 Gew.-% eines 1-Olefins der Formel R¹-CH = CH₂, worin R¹ einen geradkettigen oder verzweigten Alkylrest mit 1 bis 12 Kohlenstoffatomen bedeutet, in Lösung oder in Suspension bei einer Temperatur von 0 bis 150 °C und einem Druck von 1 bis 50 bar, in Gegenwart eines Mischkatalysators bestehend aus einer Übergangsmetallkomponente (Komponente A) und einer aluminiumorganischen Verbindung (Komponente B), wobei die Komponente B durch Umsetzung eines durch Ad- oder Absorption Wasser enthaltenden anorganischen Stoffes mit einem Aluminiumtrialkyl erhalten wurde, dadurch gekennzeichnet, daß die Polymerisation in Gegenwart eines Mischkatalysators durchgeführt wird, dessen Komponente B durch Umsetzung von Wasser mit einem Aluminiumtrialkyl im Molverhältnis Aluminiumtrialkyl zu Wasser von 4 : 1 bis 0,25 : 1 in Anwesenheit eines handelsüblichen feinteiligen Feststoffes auf Basis Siliciumdioxid und/oder Aluminiumoxid, wobei der Feststoff ohne Vorbehandlung eingesetzt wird, im Gewichtsverhältnis von Wasser zu handelsüblichem, nicht vorbehandelten Feststoff von 3 : 1 bis 1 : 3 bei einer Temperatur von -20 bis 100 °C hergestellt wurde, und dessen Komponente A eine Übergangsmetallverbindung der Formel
(Cyclopentadienyl)₂MeRHal, worin
R Cyclopentadienyl, ein C₁- bis C₆-Alkyl oder Halogen ist, Hal Halogen bedeutet und Me Titan oder Zirkonium ist, darstellt.

## Claims

1. A process for the polymerization of ethylene or of mixtures of ethylene containing up to 8% by weight of a 1-olefin of the formula R¹-CH=CH₂ in which R¹ denotes a linear or branched alkyl radical having 1 to 12 carbon atoms in solution or in suspension at a temperature of 0 to 150°C and a pressure of 1 to 50 bar, in the presence of a mixed catalyst composed of a transition metal component (component A) and an organo-aluminum compound (component B), the component B having been obtained by reacting an inorganic material containing water, as the result of adsorption or absorption, with an aluminum trialkyl, which comprises carrying out the polymerization in the presence of a mixed catalyst in which the component B has been prepared by reacting water with an aluminum trialkyl in a molar ratio of aluminum trialkyl to water of 4:1 to 0.25:1 in the presence of a commercially available finely divided solid based on silicon dioxide and/or aluminum oxide, the solid being employed without pretreatment, in a ratio by weight of water to commercially available, non-pretreated solid of 3:1 to 1:3 at a temperature of -20 to 100°C, and the component A represents a transition metal compound of the formula
(cyclopentadienyl)₂MeRHal in which
R is cyclopentadienyl, a C₁- to C₆-alkyl or halogen, Hal denotes halogen and Me is titanium or zirconium.

## Revendications

1. Procédé pour polymériser l'éthylène, ou des mélanges d'éthylène contenant au plus 8 % en poids d'une α-oléfine répondant à la formule R¹-CH=CH₂ dans laquelle R¹ représente un radical alkyle, linéaire ou ramifié, qui contient de 1 à 12 atomes de carbone, en solution ou en suspension, à une température de 0 à 150°C et sous une pression de 1 à 50 bar, en présence d'un catalyseur mixte constitué d'une composante à métal de transition (composante A) et d'un composé organoaluminique (composante B), la composante B ayant été obtenue par réaction d'un trialkyl-aluminium avec une matière minérale retenant de l'eau par adsorption ou absorption, procédé caractérisé en ce que la polymérisation est exécutée en présence d'un catalyseur mixte dont la composante B a été préparée par réaction de l'eau avec un trialkyl-aluminium dans un rapport molaire du trialkyl-aluminium à l'eau compris entre 4:1 et 0,25:1, en présence d'une matière solide disponible dans le commerce, en fines particules à base de dioxyde de silicium et/ou d'oxyde d'aluminium, en utilisant la matière solide sans prétraitement, dans un rapport pondéral de l'eau à la matière solide disponible dans le commerce, non prétraitée, compris entre 3:1 et 1:3, à une température de -20 à 100°C, et dont la composante A est un composé à métal de transition répondant à la formule :
(cyclopentadiényl)₂MeRHal
dans laquelle R représente un radical cyclopentadiényle, un radical alkyle en C₁ à C₆ ou un halogène, Hal représente un halogène et Me représente le titane ou le zirconium.
